# EUROPÄISCHE PATENTSCHRIFT

(11) **EP 4 211 064 B1**
(45) Veröffentlichungstag und Bekanntmachung des Hinweises auf die Patenterteilung: **24.07.2024**
(21) Anmeldenummer: 21805355.1
(22) Anmeldetag: 10.09.2021
(51) Int. Cl.: B65H 35/00, B26D 1/08, B65B 13/18, B65B 27/10, H01B 13/012, H01B 13/08, H01B 13/26

(54) **WICKELEINRICHTUNG ZUM UMWICKELN EINES LÄNGLICHEN BÜNDELGUTES UND VERFAHREN ZUM UMWICKELN EINES BÜNDELGUTES MIT EINEM KLEBEBAND**
WRAPPING DEVICE FOR WRAPPING ELONGATED BUNDLED GOODS, AND METHOD FOR WRAPPING BUNDLED GOODS WITH AN ADHESIVE STRIP
DISPOSITIF D'ENROULEMENT PERMETTANT L'ENROULEMENT D'UN PRODUIT EN FAISCEAU LONG ET PROCÉDÉ D'ENROULEMENT D'UN PRODUIT EN FAISCEAU AVEC UN RUBAN ADHÉSIF

(30) Priorität: 11.09.2020 DE 102020123771
(43) Veröffentlichungstag der Anmeldung: 19.07.2023
(73) Patentinhaber: Komax Taping GmbH & Co. KG, 36151 Burghaun (DE)
(72) Erfinder: SCHMELZ, Steffen, 36419 Geisa (DE); FLADUNG, Hans Peter, 36169 Rasdorf (DE); SODIES, Jörg, 36151 Burghaun (DE); REISINGER, Markus, 36132 Eiterfeld (DE)
(74) Vertreter: Körner, Volkmar Horst
(86) Internationale Anmeldenummer: PCT/DE2021/100753
(87) Internationale Veröffentlichungsnummer: WO 2022/053112

(56) Entgegenhaltungen:
- DE-A1- 102017 109 819
- DE-A1- 19 614 622

## Beschreibung

Die Erfindung betrifft eine Wickeleinrichtung zum Umwickeln eines länglichen Bündelgutes mit einem Klebeband mit einem Wickelkopf, mit einem drehbar gelagerten Rotationskörper des Wickelkopfes, mit einer Rolle zur Bevorratung des Klebebandes und mit einer Schneideinrichtung zum Schneiden des Klebebandes auf eine vorbestimmte Länge. Weiterhin betrifft die Erfindung ein Verfahren zum Umwickeln eines Bündelgutes mit einem Klebeband mit einer Wickeleinrichtung.

Eine solche Wickeleinrichtung ist beispielsweise aus der DE 10 2017 109 819 A1 bekannt. Bei dieser Wickeleinrichtung bevorratet die Rolle eine große Menge an Klebeband. Jeder Abschnitt des Bündelgutes benötigt jedoch eine vorbestimmte Länge des Klebebandes, welche gebraucht wird, um diesen Abschnitt zu umwickeln. Hierzu hat die Wickeleinrichtung eine Trenneinrichtung, mit der nach dem Umwickeln des entsprechenden Abschnitts das Klebeband abgeschnitten wird. Die Trenneinrichtung muss daher nahe dem Bündelgut schneiden, was bei unterschiedlich dicken Bündelgütern zu der Gefahr eines Einschneidens in das Bündelgut führen kann. Weiterhin führt die Rolle mit dem Vorrat an Klebeband und die Anordnung der Trenneinrichtung zu sehr großen Abmessungen des Wickelkopfes. Hierdurch gestaltet sich der Wickelkopf sehr unhandlich und benötigt für seine Bewegung einen sehr großen Energieaufwand.

Aus der DE 20 2015 001 990 U1 ist eine Wickeleinrichtung bekannt geworden, bei der eine Vorratsrolle für Klebeband von dem Wickelkopf entfernt gelagert ist. Auch bei dieser Wickeleinrichtung ist die Schneideinrichtung in der Nähe des Bündelgutes angeordnet.

Der Erfindung liegt das Problem zugrunde, eine Wickeleinrichtung der eingangs genannten Art so weiter zu bilden, dass ein Schneiden des Klebebandes in der Nähe des Bündelgutes vermieden wird. Weiterhin soll ein Verfahren geschaffen werden, welches ein besonders sicheres Umwickeln des Bündelgutes gewährleistet.

Das erstgenannte Problem wird erfindungsgemäß dadurch gelöst, dass die Schneideinrichtung außerhalb des Wickelkopfes angeordnet ist und die vorbestimmte Länge des Klebebandes im Wickelkopf gehalten ist.

Durch diese Gestaltung wird die Anordnung der Schneideinrichtung im Wickelkopf vermieden. Da der Wickelkopf nur die für den zu umwickelnden Abschnitt des Bündelgutes notwendige Menge an Klebeband trägt, ist ein Schneiden des Klebebandes nach dem Umwickeln des Bündelgutes nicht erforderlich. Damit wird eine mögliche Beschädigung des Bündelgutes durch das Schneidwerkzeug zuverlässig vermieden. Durch den Wegfall der Schneideinrichtung lässt sich der Wickelkopf besonders klein und kompakt gestalten. Nachdem die vorbestimmte Länge des Klebebandes zum Umwickeln des vorbestimmten Abschnitts des Bündelgutes aufgebraucht ist, lässt sich ein neues Klebeband für den nächsten Abschnitt in den Wickelkopf einsetzen. Damit kann auf einfache Weise ein einziges Bündelgut abschnittsweise mit unterschiedlichen Klebebändern umwickelt werden.

Zur weiteren Verringerung der Abmessungen des Wickelkopfes trägt es bei, wenn die Rolle in dem Rotationskörper angeordnet ist und das Klebeband auf der Rolle auf die vorbestimmte Länge begrenzt ist. Hierdurch benötigt die Rolle keinen Vorrat an Klebeband und kann daher besonders klein gehalten sein.

Die Bereitstellung einer ausreichenden Menge an Klebeband gestaltet sich gemäß einer anderen vorteilhaften Weiterbildung der Erfindung besonders einfach, wenn eine Vorratsrolle mit einem Vielfachen der vorbestimmten Länge außerhalb des Wickelkopfes angeordnet ist.

Die Übertragung der vorbestimmten Länge an Klebeband in den Wickelkopf gestaltet sich gemäß einer anderen vorteilhaften Weiterbildung der Erfindung besonders einfach, wenn eine Umspuleinheit die Vorratsrolle mit einem Vielfachen der vorbestimmten Länge und zumindest einen Rollenkörper zur Aufnahme der vorbestimmten Länge des Klebebandes aufweist sowie eine Bandabzugseinrichtung zur Übertragung des Klebebandes von der Vorratsrolle auf den Rollenkörper hat.

Die Beschickung des Wickelkopfes mit der vorbestimmten Länge an Klebeband gestaltet sich gemäß einer anderen vorteilhaften Weiterbildung der Erfindung besonders einfach, wenn die Umspuleinheit mehrere Aufnahmen zur Halterung von Rollenkörpern hat. Durch diese Gestaltung kann ein Rollenkörper mit der vorbestimmten Länge des Klebebandes vorbereitet werden, während ein anderer bereits vorbereiteter Rollenkörper dem Wickelkopf angedient wird. Damit kann der nächste Rollenkörper in der Umspuleinheit mit der vorbestimmten Länge an Klebeband für den nächsten Abschnitt des Bündelgutes vorbereitet werden, während der Wickelkopf den aktuellen Abschnitt umwickelt. Hierdurch lassen sich Unterbrechungen beim Wechsel der Rollenkörper besonders gering halten.

Zur weiteren Erhöhung der Geschwindigkeit der Übergabe der Rolle trägt es gemäß einer anderen vorteilhaften Weiterbildung der Erfindung bei, wenn die Aufnahmen von einer Spulstellung, in der die Umspuleinheit zur Übertragung des Klebebandes bereit ist, in eine Übergabestellung, in der die Aufnahmen mit der Rolle zur Übergabe an den Wickelkopf bereit ist, bewegbar sind.

Die Schneideinrichtung ist gemäß einer anderen vorteilhaften Weiterbildung der Erfindung weit von dem Bündelgut entfernt, wenn die Schneideinrichtung auf der Umspuleinheit angeordnet ist. Durch diese Gestaltung wird eine Beschädigung des Bündelgutes durch die Schneideinrichtung zuverlässig vermieden.

Für unterschiedliche Abschnitte des Bündelgutes können unterschiedliche Anforderungen für das zu verwendende Klebeband gelten. Unterschiedliche Klebebänder für unterschiedliche Abschnitte desselben Bündelgutes lassen sich gemäß einer anderen vorteilhaften Weiterbildung der Erfindung einfach einsetzen, wenn die Umspuleinheit mehrere Vorratsrollen mit unterschiedlichen Klebebändern hat. Hierdurch kann beispielsweise bei einem als Kabelbaum für ein Kraftfahrzeug ausgebildetes Bündelgut ein Abschnitt mit einem besonders wasserfesten Klebeband und ein anderer Abschnitt mit einem besonders abriebfesten Klebeband umwickelt werden, wenn die unterschiedlichen Anforderungen der Abschnitte dies erfordern. Ebenso können unterschiedlich farbige Klebebänder eingesetzt werden, um beispielsweise die Verlegung des Kabelbaums im Kraftfahrzeug zu vereinfachen.

Das zweit genannte Problem, nämlich die Schaffung eines besonders sicheren Verfahrens zum Umwickeln des Bündelgutes mit einem Klebeband, wird erfindungsgemäß durch folgende Schritte gelöst:
- Beschneiden des Klebebandes auf eine für einen vorgesehenen Abschnitt des Bündelgutes vorgesehene Länge
- Bereitstellung des auf die vorgesehene Länge beschnittenen Klebebandes in einem Wickelkopf
- Umwickeln des Abschnitts des Bündelgutes mit dem auf die vorbestimmte Länge beschnittenen Klebeband

Durch diese Gestaltung lässt sich das Klebeband weit von dem Bündelgut entfernt schneiden. Eine Beschädigung des Bündelgutes wird dank der Erfindung vermieden. Weiterhin lassen sich einfach bei einem Bündelgut abschnittsweise unterschiedliche Klebebänder einsetzen.

Die Bereitstellung der vorbestimmten Länge an Klebeband gestaltet sich gemäß einer anderen vorteilhaften Weiterbildung der Erfindung besonders einfach, wenn die vorbestimmte Länge an Klebeband von einer Vorratsrolle abgezogen wird, wenn die vorbestimmte Länge auf einem Rollenkörper aufgewickelt wird und von dem Klebeband von der Vorratsrolle abgetrennt wird und wenn der Rollenkörper mit der vorbestimmten Länge an Klebeband dem Wickelkopf zugeführt wird.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig.1: eine Wickeleinrichtung mit einem Bündelgut,
- Fig.2: vergrößert einen Bündelkopf der Wickeleinrichtung aus Figur 1,
- Fig.3: Vergrößert eine Umspuleinheit der Wickeleinrichtung aus Figur 1,
- Fig.4: eine Draufsicht auf eine einfache Gestaltung des Bündelgutes aus Figur 1.

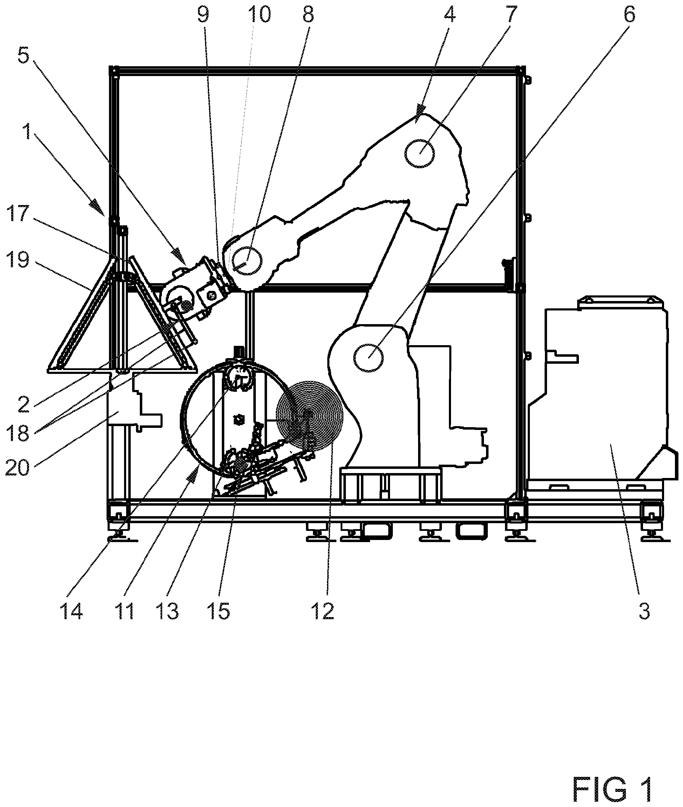

Figur 1 zeigt eine Wickeleinrichtung 1 zum Umwickeln eines Bündelgutes 2, wie beispielsweise eines aus zahlreichen verzweigten Leitungen bestehenden Kabelbaums eines Kraftfahrzeuges. Die Leitungen können dabei elektrische Leitungen und/oder Schlauchleitungen sein. Die einzelnen Bauteile der Wickeleinrichtung 1 werden von einer programmierbaren Steuereinheit 3 mit elektrischem Strom und Daten versorgt.

Die Wickeleinrichtung 1 hat einen auf einem Roboterarm 4 angeordneten Wickelkopf 5. Der Roboterarm 4 weist mehrere schematisch dargestellte Gelenke 6 - 9 auf, wodurch der Wickelkopf 5 in allen drei Raumachsen bewegt, verschwenkt und zudem um seine Längsachse 10 gedreht werden kann. Die Gelenke 6 - 9 haben jeweils nicht dargestellte, von der Steuereinheit 3 angesteuerte Antriebsmittel.

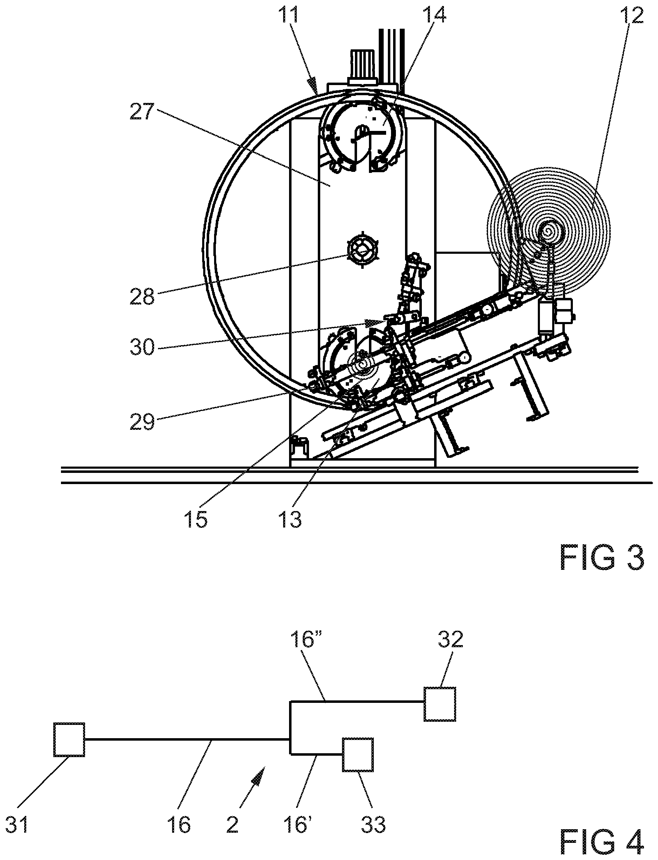

Weiterhin hat die Wickeleinrichtung 1 eine Umspuleinheit 11. Die Umspuleinheit 11 trägt eine oder mehrere Vorratsrollen 12 an Klebeband und hat zwei Aufnahmen 13, 14 für Rollenkörper 15, auf denen sich eine vorbestimmte Länge an Klebeband abwickeln lässt. Die vorbestimmte Länge an Klebeband ist auf einen begrenzten, in Figur 4 dargestellten Abschnitt 16 des Bündelgutes 2, bemessen.

Das Bündelgut 2 ist auf einem Montagebrett 17 mittels Halteelementen 18 gespannt. Ein zweites Montagebrett 19 ist dem Wickelkopf 5 abgewandt und kann mit einem neuen Bündelgut beschickt werden, während das Bündelgut 2 auf dem anderen Montagebrett 17 umwickelt wird. Die Montagebretter 17, 19 lassen sich mittels eines Brettantriebs 20 drehen, so dass wahlweise das eine Montagebrett 17 oder das andere Montagebrett 19 dem Wickelkopf 5 zugewandt ist. Selbstverständlich kann der Brettantrieb 20 auch zur Höhenverstellung oder Verschiebung der Montagebretter 17, 19 senkrecht zur Zeichenebene ausgebildet sein.

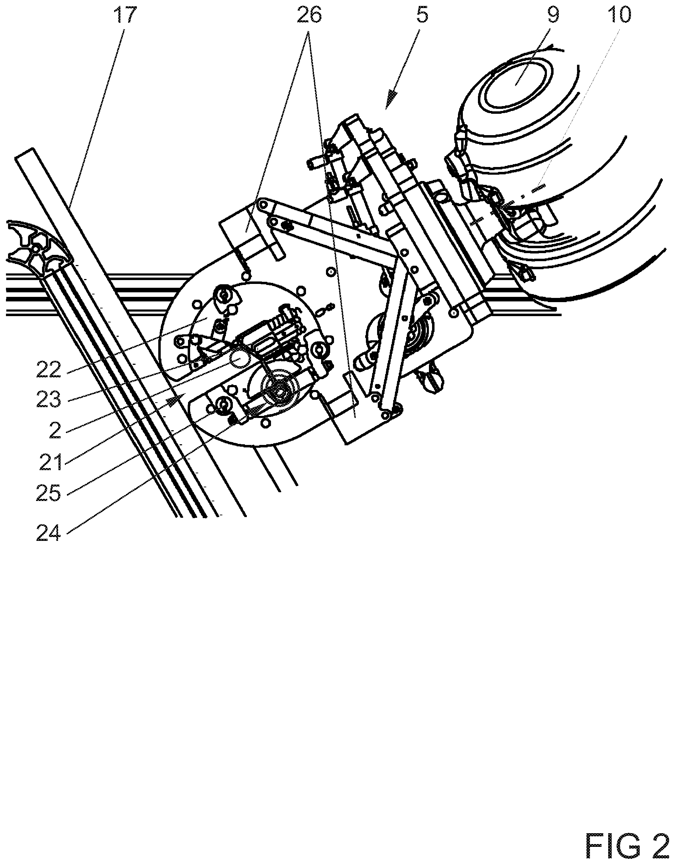

Figur 2 zeigt den Wickelkopf 5 aus Figur 1 in einer vergrößerten Darstellung vor dem Umwickeln des Bündelgutes 2. Der Wickelkopf 5 ist in Bezug auf die Darstellung aus Figur 1 von der rückseitigen Ansicht dargestellt. Der Wickelkopf 5 hat eine Öffnung 21 zum Einführen des Bündelgutes 2 und einen drehbar antreibbaren Rotationskörper 22. Der Rotationskörper 22 trägt eine bewegliche Gegenbacke 23 zur Abstützung des Bündelgutes 2 und eine Rolle 24 mit der für den vorgesehenen Abschnitt 16 des Bündelgutes 2 vorbestimmten Länge an Klebeband. Die Rolle 24 setzt sich zusammen aus dem zuvor beschriebenen Rollenkörper 15 und der darauf aufgewickelten vorgesehenen Länge an Klebeband. Weiterhin ist auf dem Rotationskörper 22 eine Führungseinrichtung 25 zur Führung und zum Abzug des Klebebandes von der Rolle 24 angeordnet.

Der Wickelkopf 5 befindet sich in einer Grundstellung, in der auf beiden Seiten des Rotationskörpers 22 angeordnete Führungselemente 26 zur Führung und Abstützung des Bündelgutes 2 radial nach außen geschwenkt sind. Zur Umwinklung wird zunächst ein Anfangsabschnitt des Klebebandes von der Rolle 24 abgezogen und vor die Öffnung 21 gehalten. Anschließend wird der Wickelkopf 5 mit seiner Öffnung 21 über den betreffenden Abschnitt 16 des Bündelgutes 2 bewegt, so dass das Bündelgut 2 auf den Anfangsabschnitt des Klebebandes gelangt. Zudem schwenken die Führungselemente 26 zu dem Bündelgut 2 und umgreifen dieses. Bei einer anschließenden Drehung des Rotationskörpers 22 und gleichzeitiger Führung des Wickelkopfes 5 entlang des Bündelgutes 2 wird das Klebeband um den vorgesehenen Abschnitt 16 des Bündelgutes 2 gewickelt. Weil die Rolle 24 nur die für den zu umwickelnden Abschnitt 16 des Bündelgutes 2 vorbestimmte Länge an Klebeband aufweist, ist der Abschnitt 16 umwickelt, wenn das Klebeband aufgebraucht ist. Das Grundprinzip eines solchen Wickelkopfes 5 ist aus dem Stand der Technik bekannt, so dass zur weiteren Offenbarung darauf verwiesen wird.

Figur 3 zeigt die Umspuleinheit 11 der Wickeleinrichtung 1 aus Figur 1. Diese Umspuleinheit 11 haltert die zumindest eine Vorratsrolle 12 mit einem Vorrat an Klebeband und die beiden Aufnahmen 13, 14 für Rollenkörper 15. In einer alternativen, nicht dargestellten Ausführungsform können mehrere Vorratsrollen 12 mit unterschiedlichen Klebebändern übereinander angeordnet sein. Die Aufnahmen 13, 14 sind an Enden eines doppelseitigen Schwenkarms 27 angeordnet. Der Schwenkarm 27 hat eine mittige Lagerung 28, so dass die Stellungen der Aufnahmen 13, 14 gewechselt werden können. In einer alternativen, nicht dargestellten Ausführungsform können selbstverständlich mehrere Aufnahmen beispielsweise auf einem drehbaren Teller angeordnet sein.

Eine der Aufnahmen befindet sich in einer Übergabestellung, in der ein Rollenkörper 15 mit der darauf aufgewickelten vorbestimmten Menge an Klebeband von dem Wickelkopf 5 aufgenommen und in der ein leerer Rollenkörper 15 von dem Wickelkopf 5 in die Umspuleinheit 11 zurück gegeben werden kann. Diese Übergabe erfolgt, indem der Wickelkopf 5 von dem Roboterarm 4 mit seiner entsprechenden Position über die Übergabestellung bewegt wird. Die andere der Aufnahmen 13 befindet sich in einer Spulstellung, in der der Rollenkörper 15 mit einer vorbestimmten Menge an Klebeband von der Vorratsrolle 12 umgespult werden kann.

Die Umspuleinheit 11 hat zudem eine Bandabzugseinrichtung 29, mittels der das Klebeband von der Vorratsrolle 12 abgezogen und dem in der Spulstellung befindlichen Rollenkörper 15 zugeführt wird. Hierdurch kann die vorbestimmte Länge an Klebeband auf den Rollenkörper 15 gewickelt werden. Weiterhin hat die Umspuleinheit 11 eine Schneideinrichtung 30 zur Abtrennung der vorbestimmten Länge an Klebeband von dem auf der Vorratsrolle 12 befindlichen Klebeband.

Figur 4 zeigt das Bündelgut 2 aus Figur 1 in einer besonders einfachen Gestaltung mit Steckkontakten 31 - 33 an seinen Enden, wie es bei Kabelbäumen von Kraftfahrzeugen üblich ist. Das Bündelgut 2 hat drei Abschnitte 16, 16', 16", welche wie zuvor beschrieben mit dem Klebeband umwickelt werden sollen. Die Abschnitte 16, 16', 16" sind jeweils unterschiedlich lang und weisen verschiedene Biegungen oder Abwinklungen auf. Jeder der Abschnitte 16, 16', 16" benötigt eine vorbestimmte Länge an Klebeband zu seiner Umwicklung. Diese vorbestimmte Länge an Klebeband berechnet sich aus der Länge des jeweiligen Abschnitts 16, 16', 16", dessen Durchmesser und der vorgesehenen Anzahl der Wicklungen des Klebebandes pro Längeneinheit. Im dargestellten Ausführungsbeispiel des Bündelgutes 2 sind also drei Rollenkörper 15 mit jeweils einer vorbestimmte Länge an dem Klebeband bereitzustellen.

## Patentansprüche

1. Wickeleinrichtung (1) zum Umwickeln eines länglichen Bündelgutes (2) mit einem Klebeband mit einem Wickelkopf (5), mit einem drehbar gelagerten Rotationskörper (22) des Wickelkopfes (5), mit einer Rolle (24) zur Bevorratung des Klebebandes und mit einer Schneideinrichtung (30) zum Schneiden des Klebebandes auf eine vorbestimmte Länge, **dadurch gekennzeichnet, dass** die Schneideinrichtung (30) außerhalb des Wickelkopfes (5) angeordnet ist und die vorbestimmte Länge des Klebebandes im Wickelkopf (5) gehalten ist.

2. Wickeleinrichtung nach Anspruch 1, **dadurch gekennzeichnet, dass** die Rolle (24) auf dem Rotationskörper (22) angeordnet ist und das Klebeband auf der Rolle (24) auf die vorbestimmte Länge begrenzt ist.

3. Wickeleinrichtung nach Anspruch 1 oder 2, **dadurch gekennzeichnet, dass** eine Vorratsrolle (12) mit einem Vielfachen der vorbestimmten Länge außerhalb des Wickelkopfes (5) angeordnet ist.

4. Wickeleinrichtung nach Anspruch 3, **dadurch gekennzeichnet, dass** eine Umspuleinheit (11) die Vorratsrolle (12) mit einem Vielfachen der vorbestimmten Länge und zumindest einen Rollenkörper (15) zur Aufnahme der vorbestimmten Länge des Klebebandes aufweist sowie eine Bandabzugseinrichtung (29) zur Übertragung des Klebebandes von der Vorratsrolle (12) auf den Rollenkörper (15) hat.

5. Wickeleinrichtung nach zumindest einem der Ansprüche 1 bis 4, **dadurch gekennzeichnet, dass** die Umspuleinheit (11) mehrere Aufnahmen (13, 14) zur Halterung von Rollenkörpern (15) hat.

6. Wickeleinrichtung nach Anspruch 4 oder 5, **dadurch gekennzeichnet, dass** die Aufnahmen (13, 14) von einer Spulstellung, in der die Umspuleinheit zur Übertragung des Klebebandes bereit ist, in eine Übergabestellung, in der die Aufnahmen (13, 14) mit der Rolle (24) zur Übergabe an den Wickelkopf (5) bereit ist, bewegbar sind.

7. Wickeleinrichtung nach zumindest einem der Ansprüche 4 bis 6, **dadurch gekennzeichnet, dass** die Schneideinrichtung (30) auf der Umspuleinheit (11) angeordnet ist.

8. Wickeleinrichtung nach zumindest einem der Ansprüche 4 bis 7, **dadurch gekennzeichnet, dass** die Umspuleinheit (11) mehrere Vorratsrollen (121) mit unterschiedlichen Klebebändern hat.

9. Verfahren zum Umwickeln eines Bündelgutes (2) mit einem Klebeband mit einer Wickeleinrichtung (1) **gekennzeichnet durch** folgende Schritte:
- Beschneiden des Klebebandes auf eine für einen vorgesehenen Abschnitt (16) des Bündelgutes (2) vorgesehene Länge
- Bereitstellung des auf die vorgesehene Länge beschnittenen Klebebandes in einem Wickelkopf (5)
- Umwickeln des Abschnitts (16) des Bündelgutes (2) mit dem auf die vorbestimmte Länge beschnittenen Klebeband

10. Verfahren nach Anspruch 9, **dadurch gekennzeichnet, dass** die vorbestimmte Länge an Klebeband von einer Vorratsrolle (12) abgezogen wird, dass die vorbestimmte Länge auf einem Rollenkörper (15) aufgewickelt wird und von dem Klebeband von der Vorratsrolle (12) abgetrennt wird und dass der Rollenkörper (15) mit der vorbestimmten Länge an Klebeband dem Wickelkopf (5) zugeführt wird.

## Claims

1. Wrapping device (1) for wrapping elongated bundled goods (2) with an adhesive strip having a winding head (5), having a rotatably mounted rotating body (22) of the winding head (5), having a reel (24) for stocking the adhesive strip and having a cutting device (30) for cutting the adhesive strip to a predetermined length, **characterised in that** the cutting device (30) is arranged outside the winding head (5) and the predetermined length of the adhesive strip is held in the winding head (5).

2. Wrapping device according to claim 1, **characterised in that** the reel (24) is arranged on the rotating body (22) and the adhesive strip on the reel (24) is restricted to the predetermined length.

3. Wrapping device according to claim 1 or 2, **characterised in that** a stock reel (12) having a multiple of the predetermined length is arranged outside the winding head (5).

4. Wrapping device according to claim 3, **characterised in that** a rewinding unit (11) has the stock reel (12) with a multiple of the predetermined length and at least one reel body (15) for receiving the predetermined length of the adhesive strip, as well as a strip feeder device (29) for transferring the adhesive strip from the stock reel (12) onto the reel body (15).

5. Wrapping device according to at least one of claims 1 to 4, **characterised in that** the rewinding unit (11) has a plurality of storage devices (13, 14) for holding reel bodies (15).

6. Wrapping device according to claim 4 or 5, **characterised in that** the storage devices (13, 14) can be moved from a winding position, in which the rewinding unit is ready to transfer the adhesive strip, into a transfer position, in which the storage devices (13, 14) with the reel (24) are ready for the transfer to the winding head (5).

7. Wrapping device according to at least one of claims 4 to 6, **characterised in that** the cutting device (30) is arranged on the rewinding unit (11).

8. Wrapping device according to at least one of claims 4 to 7, **characterised in that** the rewinding unit (11) has a plurality of stock reels (121) with different adhesive strips.

9. Method for wrapping bundled goods (2) with an adhesive strip having a wrapping device (1) **characterised by** the following steps:
- Cutting the adhesive strip to a designated length for a designated section (16) of the bundled goods (2)
- Deploying the adhesive strip cut to the designated length in a winding head (5)
- Wrapping the section (16) of the bundled goods (2) with the adhesive strip cut to the predetermined length

10. Method according to claim 9, **characterised in that** the predetermined length of adhesive strip is taken off a stock reel (12), that the predetermined length is wound onto a reel body (15) and separated from the adhesive strip of the stock reel (12) and that the reel body (15) with the predetermined length of adhesive strip is fed to the winding head (5).

## Revendications

1. Dispositif d'enroulement (1) pour enrouler un produit en paquet oblong (2) avec un ruban adhésif, avec une tête d'enroulement (5), avec un corps de rotation (22) de la tête d'enroulement (5) monté de manière rotative, avec un rouleau (24) pour approvisionner le ruban adhésif et avec un dispositif de coupe (30) pour couper le ruban adhésif à une longueur prédéterminée, **caractérisé en ce que** le dispositif de coupe (30) est disposé à l'extérieur de la tête d'enroulement (5) et la longueur prédéterminée du ruban adhésif est maintenue dans la tête d'enroulement (5).

2. Dispositif d'enroulement selon la revendication 1, **caractérisé en ce que** le rouleau (24) est disposé sur le corps rotatif (22) et le ruban adhésif est limité à la longueur prédéterminée sur le rouleau (24).

3. Dispositif d'enroulement selon la revendication 1 ou 2, **caractérisé en ce qu'**un rouleau d'approvisionnement (12) avec un multiple de la longueur prédéterminée est disposé à l'extérieur de la tête d'enroulement (5).

4. Dispositif d'enroulement selon la revendication 3, **caractérisé en ce qu'**une unité de rebobinage (11) présente le rouleau d'approvisionnement (12) avec un multiple de la longueur prédéterminée et au moins un corps de rouleau (15) pour recevoir la longueur prédéterminée du ruban adhésif, et présente un dispositif d'extraction de ruban (29) pour transférer le ruban adhésif du rouleau d'approvisionnement (12) sur le corps de rouleau (15).

5. Dispositif d'enroulement selon au moins l'une quelconque des revendications 1 à 4, **caractérisé en ce que** l'unité de rebobinage (11) présente plusieurs logements (13, 14) pour le maintien de corps de rouleaux (15).

6. Dispositif d'enroulement selon la revendication 4 ou 5, **caractérisé en ce que** les logements (13, 14) sont mobiles d'une position de bobinage, dans laquelle l'unité de rebobinage est prête à transférer le ruban adhésif, à une position de transfert, dans laquelle les logements (13, 14) avec le rouleau (24) sont prêts à être transférés à la tête d'enroulement (5).

7. Dispositif d'enroulement selon au moins l'une quelconque des revendications 4 à 6, **caractérisé en ce que** le dispositif de coupe (30) est disposé sur l'unité de rebobinage (11).

8. Dispositif d'enroulement selon au moins l'une quelconque des revendications 4 à 7, **caractérisé en ce que** l'unité de rebobinage (11) présente plusieurs rouleaux d'approvisionnement (121) avec différents rubans adhésifs.

9. Procédé d'enroulement d'un produit en paquet (2) avec un ruban adhésif avec un dispositif d'enroulement (1), **caractérisé par** les étapes suivantes :
- découpe du ruban adhésif à une longueur prévue pour une section prévue (16) du produit en paquet (2)
- mise à disposition du ruban adhésif découpé à la longueur prévue dans une tête d'enroulement (5)
- enroulement de la section (16) du produit en paquet (2) avec le ruban adhésif coupé à la longueur prédéterminée

10. Procédé selon la revendication 9, **caractérisé en ce que** la longueur prédéterminée de ruban adhésif est tirée d'un rouleau d'approvisionnement (12), **en ce que** la longueur prédéterminée est enroulée sur un corps de rouleau (15) et est séparée du ruban adhésif du rouleau d'approvisionnement (12) et **en ce que** le corps de rouleau (15) avec la longueur prédéterminée de ruban adhésif est amené à la tête d'enroulement (5).
